# EUROPEAN PATENT APPLICATION

(11) **EP 2 992 956 A1**
(43) Date of publication of application: **09.03.2016**
(21) Application number: 14791320.6
(22) Date of filing: 30.04.2014
(51) Int. Cl.: B01J 29/89, B01J 29/076, B01D 53/56

(54) **COMPLEX SELECTIVE CATALYTIC REDUCTION CATALYST**

(30) Priority: 02.05.2013 KR 20130049199
(71) Applicant: Heesung Catalysts Corporation, Siheung-si, Gyeonggi-do 429-848 (KR)
(72) Inventor: HAN, Hyun-sik, Seoul 138-842 (KR); AHN, Neung-Gyun, Siheung-si Gyeonggi-do 429-863 (KR); HA, Jae-Au, Gwangmyeong-si Gyeonggi-do 423-713 (KR); LEE, Tae-woo, Ansan-si Gyeonggi-do 425-903 (KR); KIM, Eun-seok, Ansan-si Gyeonggi-do 426-743 (KR)
(74) Representative: Regimbeau
(86) International application number: PCT/KR2014/003826
(87) International publication number: WO 2014/178636

(57) **Abstract**

The present invention relates to: a complex selective catalytic reduction (SCR) catalyst having a double-layer structure in which a V₂O₅/TiO₂ layer is formed as an upper or lower layer and a zeolite layer containing metal is formed as a lower or upper layer, or a complex SCR catalyst having a single-layer structure formed from a mixture of V₂O₅/TiO₂ and zeolite containing metal; and an SCR catalyst having improved occlusion of ammonia capable of efficiently converting NOx into a harmless component in an acceleration and deceleration section of a diesel engine and an exhaust system having improved diesel engine exhaust gas purification, especially purification of nitride oxides at low temperatures by using the same.

## Description

### Technical Field

The present invention relates to a complex selective catalytic reduction catalyst. More particularly, the present invention relates to a complex selective catalytic reduction (SCR) catalyst with improved ammonia occlusion ability to effectively convert NOx into innoxious matter in the acceleration and deceleration phases of an engine, and to a discharge apparatus for exhaust gas with improved purification ability for nitrogen oxides at low temperatures that do not allow for the injection of a reducing agent, using the same.

### Background Art

A diesel engine has excellent utility as a power system for vehicles thanks to its intrinsic high thermal efficiency (i.e. excellent fuel economy) and high torque at low speeds, and can be operated at high A/F (air-to-fuel) ratios, even in the condition of fuel rarefaction. For these reasons, diesel engines exhibit high rates of conversion of hydrocarbons into power, and release exhaust gas that has a minimal content of carbon monoxide, but high content of nitrogen oxides (NOx) and particulate matter. Nitrogen oxides (NOx) and particulate matter are diesel exhaust gas ingredients that are difficult to convert into innoxious matter, which is problematic because emission standards have recently become more stringent due to environmental problems. In particular, with respect to the removal of NOx, various technical alternatives have been attempted. Representative among such technical measures are SCR (Selective Catalytic Reduction) and LNT (Lean NOx Trap) catalyst systems. The present invention addresses an SCR technology and more particularly an SCR catalyst.

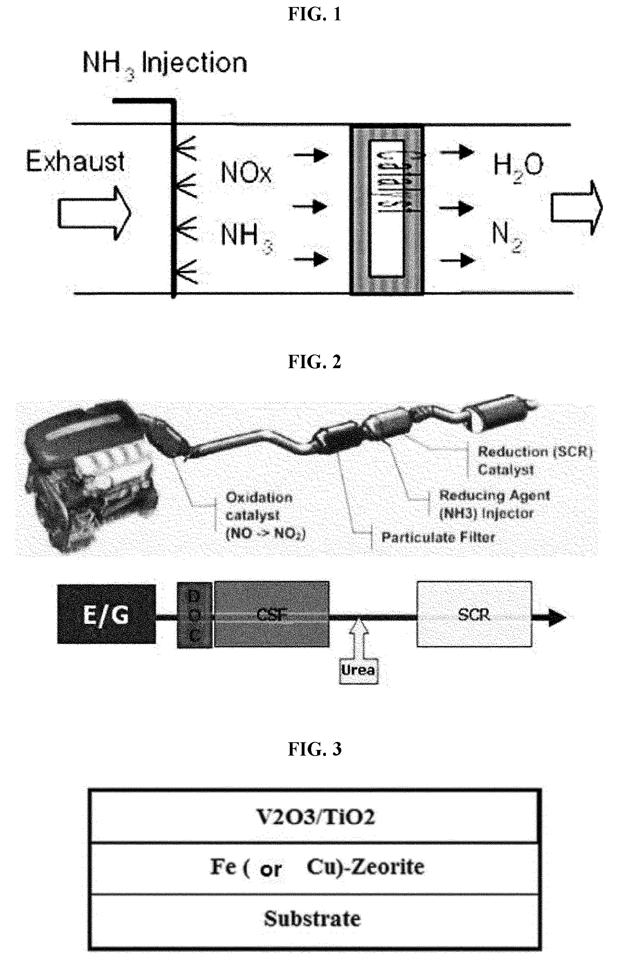

FIG. 1 is a schematic view of an SCR system. SCR is a means of reducing NOx, with the aid of ammonia or urea as a reducing agent, into N₂ and H₂O according to the following reaction mechanism.

4NO + 4NH₃ + O₂ ⇒ 4N₂ + 6H₂O

2NO₂ + 4NH₃ + O₂ ⇒ 3N₂ + 6H₂O

NO + NO₂ + 2NH₃ ⇒ 2N₂ + 3H₂O

Typically used in an SCR system are V₂O₅/TiO₂ catalysts or metal-exchanged zeolite catalysts. Particularly, the V₂O₅/TiO₂ catalyst operates at 250-450°C, but does not guarantee catalytic performance at low temperatures in the presence of NO alone. In contrast, abundant NO₂ in the exhaust gas improves the catalytic performance of the catalyst and extends the low-temperature operation range thereof. Hence, an oxidation catalyst may be placed upstream of the SCR catalyst in the system to oxidize NO into NO₂, resulting in the enrichment of NO₂. On the other hand, too high a NO₂/NO ratio deteriorates rather than improves the catalytic performance, and thus it has been found to be optimal to maintain the NO₂:NO ratio = 1. Typically, an SCR system is composed of an oxidation catalyst responsible for converting NO, among the NOx generated in the engine, into NO₂, a particulate filter, a reducing agent injector, and an SCR catalyst in that order (see FIG. 2).

### Disclosure

### Technical Problem

A V₂O₅/TiO₂ catalyst can be suitable for use in a diesel engine because of its superiority to zeolite-based catalysts in terms of resistance to sulfur poisoning, but suffers from the disadvantage of being poor in activity in a low-temperature range, in which it becomes impossible to inject the reducing agent ammonia because of the low storage capability for ammonia. In detail, a diesel vehicle generates various engine load conditions upon frequent acceleration and deceleration (transient) operations, during which the temperature of the exhaust gas is sometimes lowered to 200°C or less, at which urea, a precursor of the reducing agent, cannot be injected. At this low temperature, the V₂O₅/TiO₂ catalyst is unlikely to operate and thus cannot remove NOx. Therefore, the catalyst should be supplemented with a structure that enables the catalyst to maintain its ability to reduce NOx by virtue of the NH₃ stored therein even when urea is difficult to inject. That is, there is a need for a V₂O₅/TiO₂ catalyst with improved ability to store NH₃.

### Technical Solution

It is an object of the present invention to provide an SCR catalyst that is superior in both low-temperature activity and NOx conversion rate. It is another object of the present invention to provide an apparatus for discharging exhaust gas from a diesel engine using an SCR catalyst that exhibits excellent low-temperature activity and NOx conversion rate.

In order to accomplish the above objects, the present invention provides a complex SCR catalyst having a bilayer structure in which a V₂O₅/TiO₂ bed is overlaid on a metal-exchanged zeolite bed or in which a metal-exchanged zeolite bed is overlaid on a V₂O₅/TiO₂ bed, or a mixture structure in which V₂O₅/TiO₂ and metal-exchange zeolite are mixed. Other features of the present invention include the following descriptions, but are not limited thereto. The zeolite may be beta zeolite, ZSM5, Zeolite Y, β Zeolite, mordenite or CHA, and the metal-exchanged zeolite may be Cu- or Fe-zeolite.

### Advantageous Effects

The complex SCR catalyst according to the present invention exhibits better catalytic activity, and is particularly improved in low-temperature activity as well as resistance to sulfur poisoning, compared to a simple V₂O₅/TiO₂ catalyst.

### Description of Drawings

FIG. 1 is a schematic view of a typical SCR system;
FIG. 2 is a schematic view of a typical discharge system for a diesel engine;
FIG. 3 is a bilayer selective reduction catalyst structure according to one embodiment of the present invention;
FIG. 4 is a graph showing changes in NOx conversion rate with temperature of a control catalyst (V₂O₅/TiO₂ alone) and the bilayer catalyst (V₂O₅/TiO₂ // metal-exchanged zeolite) of the present invention;
FIG. 5 is a graph showing ammonia amounts occluded in catalysts according to contents of V₂O₅/TiO₂ and Fe-exchanged (Fe-Zeolite) catalytic components.
FIG. 6 is a graph showing NOx conversion rates of control catalysts (V2O5/TiO2 alone) and a bilayer catalyst (V2O5/TiO2 // Fe-Zeolite) according to one embodiment of the present invention;
FIG. 7 is a graph showing NOx conversion rates of control catalysts (V₂O₅/TiO₂ alone) and a bilayer catalyst (V₂O₅/TiO₂ // Fe-Zeolite) according to one embodiment of the present invention in acceleration-deceleration sections; and
FIG. 8 is a graph showing NOx conversion rates of the control catalyst (V₂O₅/TiO₂) and the bilayer structure catalyst (V₂O₅/TiO₂ // Fe-Zeolite) of the present invention after sulfur poisoning.

### Best Mode

In accordance with an embodiment of the present invention, the complex SCR catalyst having a bilayer structure is schematically illustrated in FIG. 3. The catalyst according to the present invention (hereinafter referred to as 'complex SCR catalyst' or simply a 'Hybrid' catalyst) comprises a V₂O₅/TiO₂ bed as an upper layer and a metal-exchanged zeolite bed as a lower layer. The metal-exchanged zeolite in the lower layer may be Cu- or Fe-exchanged zeolite. Either or both of the upper layer and the lower layer in the SCR catalyst may further comprise an ingredient for facilitating adhesiveness, and the ingredient may be selected from among silica, zirconia, and alumina.

The complex SCR catalyst according to the present invention has an SCR catalyst module, prepared by coating a ceramic substrate such as cordierite or a refractory metal substrate such as stainless steel with the catalytic ingredients. A typical substrate is a flow-through carrier that has a front side and a rear side with multiple microchannels providing linear connections therebetween. The SCR catalyst module comprises an injecting means, installed at the fore end thereof, for injecting a reducing agent. Examples of the injecting means may include a pump or nozzle for spraying urea or ammonia, which serves as a reducing agent.

The complex SCR catalyst applicable to the SCR catalyst module of the present invention is prepared as follows. First, commercially available Fe-exchanged zeolite (Fe-Zeolite) is slurried. Then, the resulting slurry is applied to a cordierite or metal substrate, dried and sintered. Next, a slurry of V₂O₅/TiO₂, which is also commercially available, is overlaid on the zeolite layer, dried and sintered to afford a bilayer-type complex SCR catalyst. Preferably, the SCR catalyst comprises V₂O₅ in an amount of 2.5 to 5.0% by weight, TiO₂ in an amount of 80-200g/L, and Fe-Zeolite in an amount of 30-100 g/L. Likewise, Cu-exchanged zeolite (Cu-Zeolite) may be applied as a lower layer. Briefly, a slurry of zeolite or titania, impregnated with reduction catalyst components, is prepared in a typical manner, and dispersed or milled so that about 90% of the particles have a size of 1-12 um. Then, the resulting slurry is applied inside a cordierite honeycomb, and dried at 110°C to 140°C for about 10 min, followed by sintering at 450°C to 500°C to complete a complex SCR catalyst.

Below, the catalytic activity of the complex SCR catalyst (bilayer structure: upper layer 3.0% V₂O₅/TiO₂ (140g/L) and lower layer Fe-Zeolite (70g/L)) and a control catalyst (3.0% V₂O₅/TiO₂ (140g/L) alone) are compared.

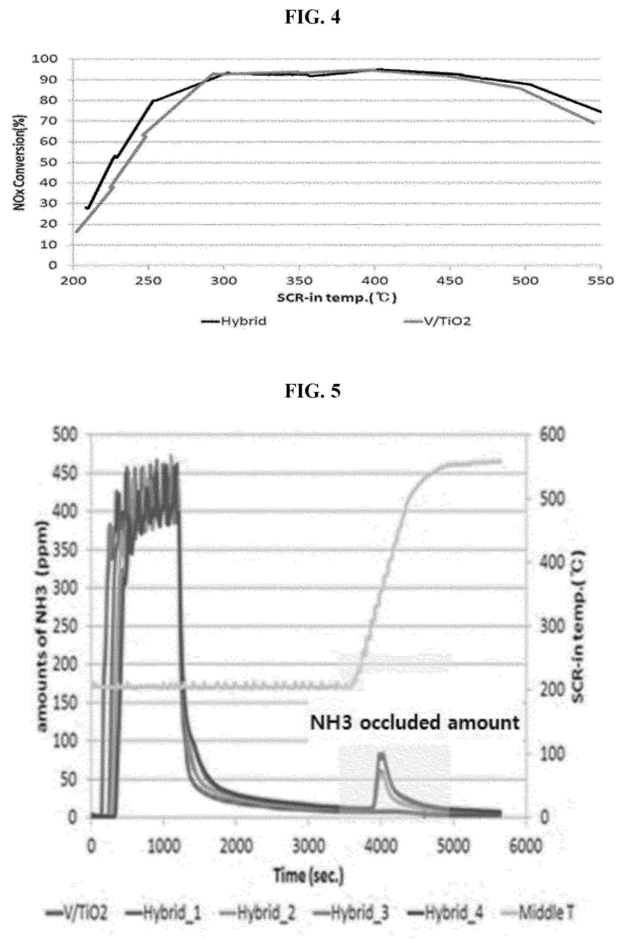

FIG. 4 shows changes in NOx conversion rate with temperature when a mixture of NH₃/NOx = 1 is introduced at a space velocity of 60K/hr. Similar NOx conversion rates were detected between the complex catalyst of the present invention and the control catalyst in the operation temperature section of V₂O₅/TiO₂, but the complex catalyst of the present invention exhibited improved NOx conversion rates at temperatures of 250°C or less, at which the V₂O₅/TiO₂ catalyst cannot operate properly, compared to the control catalyst. Placed in the lower layer of the SCR system according to the present invention, the zeolite catalyst greatly contributes to the NH₃ occlusion capability of the V₂O₅/TiO₂ catalyst structure, thereby enhancing low-temperature activity.

To examine the improvement in ammonia occlusion capability, control and complex SCR catalysts were manufactured, as indicated in Table 1, and tested at an NH₃ flow rate of 250 ml/min.

**TABLE 1**

| | Control Catalyst | Hybrid 1 | Hybrid 2 | Hybrid 3 | Hybrid 4 |
|---|---|---|---|---|---|
| | (V₂O₅/TiO₂) | | | | |
| V₂O₅ Content | 3% | 3% | 3.5% | 3% | 3.5% |
| TiO₂ Content | 140g/L | 140g/L | 140g/L | 140g/L | 140g/L |
| Fe-Zeolite Content | None | 50g/L | 50g/L | 70g/L | 70g/L |

The results are depicted in FIG. 5. As can be seen, the ammonia occlusion capability of the hybrids according to the present invention is superior to that of the control catalyst. In particular, a larger amount of zeolite was observed to lead to a greater improvement in occlusion capability. Various arrangements of the V₂O₅/TiO₂ catalyst and the Fe-exchanged zeolite (Fe-Zeolite) catalyst are possible: 1) the two components are homogeneously mixed, 2) a bilayer structure in which the Fe-Zeolite is deposited on the the V₂O₅/TiO₂ component, and 3) a bilayer structure in which Fe-BEA lies beneath the V₂O₅/TiO₂ component. The conversion rates of the three different catalyst structures at 230°C and 250°C are summarized in Table 2, below.

**TABLE 2**

| SCR Catalyst Structure | NOx Conversion Rate (%) | | Remarks |
|---|---|---|---|
| | at 230°C | at 250°C | |
| V₂O₅ alone (Control Catalyst) | 47.2 | 63.8 | The same condition as in FIG 4, except for fixation at 230°C or 250°C |
| TiO₂ alone (Control Catalyst) | 35.9 | 51.8 | |
| V/TiO₂+Fe-BEA Mixture | 46.5 | 64.5 | |
| Fe-BEA(supra)//V/TiO₂ (infra) | 50.5 | 68.8 | |
| V/TiO₂(supra)//Fe-BEA(infra) | 62.3 | 83.6 | |

The data show that the complex catalysts having both vanadia and zeolite catalytic components exhibit higher NOx conversion rates than do the control catalysts having only one of the catalytic components, the structure comprising vanadia in an upper layer and zeolite in a lower layer evidently being superior to the other bilayer structures.

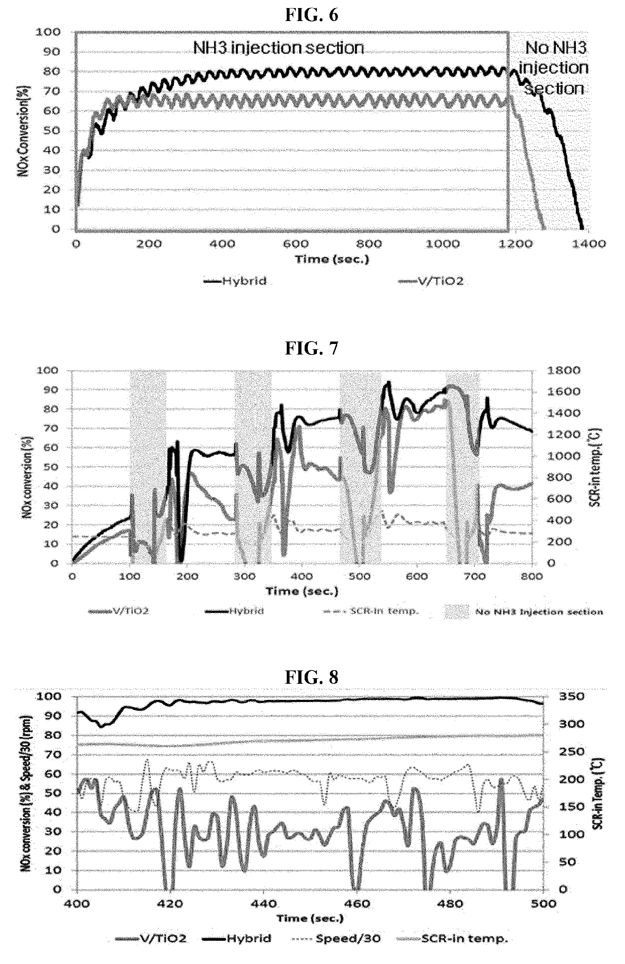

FIG. 6 is a graph showing the NOx conversion rates of control catalysts (V2O5/TiO2 alone) and a bilayer catalyst (V2O5/TiO2 // Fe-Zeolite, hybrid 4) at 250°C during driving. Having improved ammonia occlusion capability, the NOx conversion rate of the bilayer catalyst increased from the moment that driving commenced and particularly exhibited distinguished NOx removal rates even when NH3 injection was halted, compared to the control catalysts.

FIG. 7 is a graph showing the NOx conversion rates of control catalysts (V₂O₅/TiO₂ alone) and a bilayer catalyst (V₂O₅/TiO₂ // Fe-Zeolite) in acceleration-deceleration sections. As shown in the graph, the NOx conversion rate of the complex SCR catalyst was greatly enhanced compared to those of the control SCR catalysts.

Surprisingly, the present inventors found that the complex SCR catalyst of the present invention was improved in resistance to sulfur poisoning as well as in ammonia occlusion capability, both of which contribute to an increase in NOx conversion rate. FIG. 8 depicts the NOx conversion rates of the control catalyst (V₂O₅/TiO₂) and the bilayer structure catalyst (V₂O₅/TiO₂ // Fe-Zeolite) of the present invention after sulfur poisoning. Both the catalysts were measured for NOx conversion rate after exposure to 4 g/L sulfur. Surprisingly, the selective reduction catalyst with a bilayer structure having V₂O₅/TiO₂ as a supra layer and metal-exchanged zeolite as an infra layer was found to be greatly improved in resistance to sulfur poisoning compared to the control catalysts (V₂O₅/TiO₂).

## Claims

1. A complex SCR catalyst, having a bilayer structure comprising a V₂O₅/TiO₂ bed as a supra layer and a metal-exchanged zeolite bed as an infra layer.

2. A complex SCR catalyst, having a bilayer structure comprising a V₂O₅/TiO₂ bed as an infra layer and a metal-exchanged zeolite bed as a supra layer.

3. A complex SCR catalyst, having a monolayer structure comprising a mixture of V₂O₅/TiO₂ and metal-exchanged zeolite.

4. The complex SCR catalyst of claim 1, 2 or 3, wherein the metal-exchanged zeolite is Cu- or Fe-exchanged zeolite.

5. The complex SCR catalyst of claim 1, 2 or 3, further comprising silica, zirconia or alumina for enhancing adhesiveness between the catalytic ingredients.
